Europäisches Patentamt

European Patent Office

Office européen des brevets

(19)

(11) Publication number: **0 086 620**
**A1**

(12) # EUROPEAN PATENT APPLICATION

(21) Application number: 83300617.4

(22) Date of filing: 08.02.83

(51) Int. Cl.³: **C 08 J 9/06**
// (C08J9/06, C08L23/02)

(30) Priority: 09.02.82 IT 1951682

(43) Date of publication of application: 24.08.83
Bulletin 83/34

(84) Designated Contracting States: BE DE FR GB NL

(71) Applicant: **Montedison S.p.A., 31, Foro Buonaparte, I-20121 Milan (IT)**

(72) Inventor: **Giovanardi, Sandro, Via della Crispa, 48 Focomorto (Ferrara) (IT)**
Inventor: **Corbelli, Luigi, 42, C,so Vittorio Veneto, Ferrara (IT)**
Inventor: **Braga, Vittorio, 12, Via G. Meli, Ferrara (IT)**

(74) Representative: **Whalley, Kevin et al, Marks & Clerk 57/60 Lincoln's Inn Fields, London WC2A 3LS (GB)**

(54) Polymeric compositions suitable for the manufacture of foamed articles, and a process for preparing the same.

(57) Polymeric compositions suitable for the manufacture of foamed articles, comprising a foaming agent in admixture with a dynamically vulcanized mix of an EPDM rubber or of an ethylene-propylene elastomeric copolymer with a thermoplastics olefinic polymer. A process for preparing such compositions comprises the steps of dynamically vulcanizing a mix of EPDM rubber or of an ethylene/propylene elastomeric copolymer with a thermoplastics olefinic polymer and successively mixing the mix with a foaming agent, at low temperature.

EP 0 086 620 A1

## "POLYMERIC COMPOSITIONS SUITABLE FOR THE MANUFACTURE OF FOAMED ARTICLES, AND A PROCESS FOR PREPARING THE SAME"

This invention relates to polymeric compositions suitable for the manufacture of foamed articles, and to a process for preparing the same. More particularly the invention relates to a process for preparing foamed articles based on mixes of a cross-linked elastomer with a thermoplastics olefinic polymer.

Processes for preparing similar articles are known, which consist in preparing a mix of a rubber of the non-cross-linked EPDM type with an olefinic polymer together with cross-linking and foaming agents, and in vulcanizing in a press the article prepared from such mix, thus obtaining a foamed article as a consequence of the action of the foaming agent at the vulcanizing temperature.

Such processes have the drawback of requiring very long vulcanization times, and of providing articles of

0086620

relatively high density, equal to or higher than 0.2 g/cc.

The present invention in one aspect provides a polymeric composition suitable for the manufacture of foamed articles, comprising a mixture of a foaming agent with a dynamically vulcanized mix of an EPDM rubber, or of an ethylene-propylene elastomeric copolymer, with 5% - 95% by weight, referred to the said mix, of a thermoplastics olefinic polymer.

The invention in another aspect provides a process for preparing a polymeric composition suitable for the manufacture of foamed articles, comprising subjecting to dynamic vulcanization a mix including an elastomer, composed of an EPDM rubber or of an ethylene-propylene copolymer, and a thermoplastics olefinic polymer in an amount of from 5% to 95% by weight referred to the mix with the elastomer, and then adding a foaming agent to the said mix at a temperature lower than the temperature at which the said foaming agent becomes active.

The process according to the invention permits foamed articles to be obtained which have a particularly low density, at high production rates, such process comprising subjecting to dynamic vulcanization a mix composed of an elastomer of an ethylene/propylene copolymer or of an EPDM rubber, with from 5% to 95% by weight, in the mix with the elastomer, of an olefinic thermoplastics polymer, and a vulcanizing agent for such elastomer, then adding to the mix so vulcanized a foaming agent, at a temperature of the mix lower than the temperature at which such foaming agent becomes active, and then bringing the mix containing the foaming agent to the temperature at which such agent becomes active, with formation of a foamed shaped body.

The mixture of the foaming agent with the (plasto-elastomeric) mix of vulcanized elastomer and olefinic polymer can be subjected to grinding, prior to the foaming step, and directly marketed as such.

The dynamic vulcanization of the mix of elastomer with the olefinic polymer is accomplished according to known techniques as are described, for example, in US Patent Nos. 3 758 643, 3 862 106, 3 037 954, and 3 806 558, in French Patent No. 2 408 632, and in Italian Patent Application No. 24213 A/80 in the name of the present Applicants, by employing vulcanizing agents in amounts ranging from 0.05% to 10%, but preferably from 0.1 to 8%, by weight referred to the elastomer.

As vulcanizing agents it is possible to use all those which are known for the vulcanization of the EPDM rubbers and of the ethylene-propylene elastomeric copolymers, e.g. peroxides, phenolic resins, sulphur

0086620

and sulphur donors, isocyanates, sulphonated compounds, and radiations.

Mixing of the plasto-elastomeric mix with the foaming agent can be carried out by incorporation of the latter into the mix which is in the plastic or softened state, for example by conveying the components between two rollers maintained at a temperature sufficient to soften the polymeric mass, but not such as to activate the foaming agent. The resulting mixture can be then granulated, and the granules can be used for manufacturing the foamed shaped articles through heating in proper press moulds. It is also possible to achieve such mixing simply by adding the foaming agent to the granules of the plasto-elastomeric mix, operating in suitable Banbury mixers or in compounding screw mixers, so that the foaming agent can adhere to the granule surface.

As EPDM rubbers there are preferably used those containing from 20 to 70% by weight of propylene and from 0.5 to 20%, more preferably from 1 to 10%, by weight of a dienic monomer, combined together, calculated on the terpolymer weight.

Dienic monomers which can be present in the rubber are, for example, 1,4-hexadiene; 2-methyl-1,4-pentadiene; 1,4,9-decatriene; 1,5-cyclooctadiene; 1,4-cyclopentadiene; dicyclopentadiene; ethylidene-norbornene; and the substitution derivatives of such monomers.

As thermoplastics olefinic polymer present in the mix with the EPDM rubber or with the ethylene-propylene elastomeric copolymer, it is possible to use the polymers obtained by polymerization of one or more monoolefins by processes at low or high pressure, such as for example : low or high density polyethylenes, polypropylene, polybutene-1, poly-4-methylpentene-1, poly-1-hexene, poly-5-methyl-1-hexene, and poly-3--methyl-1-pentene.

The foaming agent is preferably added to the plastomeric mix coming from the dynamic vulcanization in an amount ranging from 0.5 to 10% by weight referred to the total weight of the mixture with such mix. Suitable foaming agents are those compounds capable of releasing, at a temperature between 100° and 250°C, but preferably between 130° and 250°C, a gas which is inert towards the polymers contained in the mix, such as nitrogen, oxygen or carbon dioxide. Compounds of such kind are, for example, nitrogen compounds, nitrous derivatives, derivatives of sulphonylhydrazines, and bicarbonates.

A preferred general method of preparing the compositions of the present invention comprises subjecting to mixing, in a Banbury mixer, during 2-10 minutes, the elastomeric component, the plastomer and the cross-linking agent at a temperature ranging from about 120° to 220°C; at the conclusion of the mixing step, i.e. when cross-linking has been achieved, the polymeric mass, which retains good processability characteristics, is discharged and cooled down to a temperature of about 110°C, and at such temperature the foaming agent is added thereto.

The amount of cross-linking agent to be utilized in such operation will vary as a function of its chemical nature, such amount being chosen so as to obtain, once the action of the cross-linking agent is exhausted, a vulcanized polymeric mass still processable to be homogeneously mixed with the foaming agent.

The resulting mixture can be granulated and the granules can be used to prepare articles, which are obtained by heating in compression or injection presses or by feeding the granules to an extruder at the temperature at which the foaming agent becomes active.

The foamed products obtained from such mixtures or compositions have a density from 0.02 to 0.2 $g/cm^3$, and a cellular structure with porous or microporous cells which are isolated from, or hardly communicating with, one another. At the same time, they possess the same good elastic properties and may be manufactured, along various possible articles, into foamed drawn articles, moulded sheets and articles obtainable according to moulding or drawing techniques.

The invention will be further described with reference to the following illustrative Examples.

EXAMPLES

Into an internal mixer for rubbers of the Banbury type, having a capacity of 13 liters, there were introduced an elastomeric component, a plastomeric component and a vulcanizing agent, of the type and in the amount by weight (grams) as indicated in Table 1 below.

During mixing and vulcanization, the conditions in the mixer were as follows :

- initial temperature of the mixer   .... 100°-110°C
- speed of the two rotors thereof   .... 60 rpm and 50 rpm, respectively
- temperature after 7 minutes   .... 210°-230°C
- dwell of the mix at 210-230°C   .... 1 minute.

The mix was then discharged from the Banbury mixer and conveyed into an open mixer, where it was cooled, additioned with a foaming agent, mixed with the latter during 7-9 minutes, and finally cooled to room temperature (22°C). The mix so obtained was granulated by a SAGITTA "cold" cutter, and the granules were utilized for the preparation of manufactured articles by feeding them into compression or injection presses or into extruders, and by operating under temperature and time conditions suited to foaming, as indicated in Table 1.

For the characterization of the mix components and of the products, the following methods were employed :

M.I. : for polyethylene : Standards ASTM D-1238/E for polypropylene: Standards ASTM D-1238/L

Specific gravity : Standards BS 903, part. $F_1$-$F_9$

Unitary load : Standards ASTM D-1056-68 Shore hardness, type OO : Standards ASTM D-2240-68 Water absorption : Standards ASTM D-470-68 .

Table 1

| | EXAMPLES | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| **Elastomer** | | | | | | | | | | | | | | |
| A | 70 | 80 | 70 | 60 | 85 | 80 | 50 | | | | | 60 | 70 | 70 |
| B | | | | | | | | 60 | | | | | | |
| C | | | | | | | | | 50 | | | | | |
| D | | | | | | | | | | 70 | | | | |
| E | | | | | | | | | | | 60 | | | |
| **Plastomer** | | | | | | | | | | | | | | |
| Low density polyethylene (M.I. = 70) | 30 | | | | | | | | | 30 | | | | |
| Low density polyethylene (M.I. = 2) | | 20 | | | | | | | | | | | | |
| High density polyethylene (M.I. =7) | | | 30 | | | | 50 | | 40 | | | 40 | | 30 |
| High density polyethylene(M.I.=25) | | | | 30 | | | | | 50 | | | | 30 | |
| Polypropylene (M.I. = 10) | | | | 10 | 15 | | | | | | 30 | | | |
| Polypropylene (M.I. = 1) | | | | | | 20 | | | | | | | | |
| **Vulcanizing agents** | | | | | | | | | | | | | | |
| 4,4-dithiomorpholine | 0,8 | | 0,6 | 0,6 | 0,4 | 0,4 | | | 0,9 | 0,65 | | | 0,6 | |
| di-pentamethyl-thioureamessulphide | | 0,4 | | | | | 0,45 | | | | | 0,4 | | |
| N,N-diphenylguanidine | | | | | | | | | | | | 0,1 | | |
| Crystal sulphur | | | | | | | | | | | | 0,2 | | |
| 1,3'-bis(ter.butyl-peroxy-isopropyl)-benzene | | | | | | | | | | 0,8 | 1 | | | 1,2 |
| **Foaming agents** | | | | | | | | | | | | | | |
| Azodicarbonamide | 10 | 5 | 5 | 4,5 | | 3 | 5 | 4,5 | 5 | 4 | 4 | 6 | | |
| Aminoguanidine bicarbonate GENITRON THT (trade-mark) | | | | | 3,5 | | | | | | | | 5 | 5 |

(produced by FISONS IND.CHEMICALS LTD.)

- 9 -

Table 1 (continuation)

| | EXAMPLES | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| **Foaming conditions** | | | | | | | | | | | | | | |
| Temperature (°C) ..................... | 190* | 200** | 190* | 190* | 200 | 200* | 195·* | 200* | 200* | 200*** | 200* | 200* | 190*** | 230** |
| Dwell time in foaming (minutes)............ | 5 | 1 | 4 | 3 | 2 | 2 | 2 | 2 | 2 | 1 | 3 | 1,3 | 3 | 1 |
| **Characteristics of the foamed products** | | | | | | | | | | | | | | |
| Specific gravity (g/cc)..................... | 0,05 | 0,06 | 0,08 | 0,09 | 0,12 | 0,14 | 0,06 | 0,09 | 0,11 | 0,07 | 0,12 | 0,06 | 0,2 | 0,08 |
| unitary load for 50% of buckling (Kg/cm$^2$)............................. | 0,8 | 0,95 | 1 | 1,1 | 1,15 | 0,9 | 0,7 | | | | | | | |
| Shore hardness, type 00 (points)............. | 47 | 54 | 59 | 68 | 65 | 67 | 50 | 70 | 73 | 65 | 75 | 50 | 74 | 62 |
| Water absorption (%)......................... | 0,55 | 0,1 | 0,35 | 0,05 | 0,22 | 0,15 | 0,09 | 0,2 | 0,2 | 0,1 | 0,08 | 0,01 | 0,02 | 0,7 |

Remarks to Table 1

\*\*\*\*

Elastomer of the following type :

A = terpolymer : ethylene (64.7 - 70.7%, propylene
    (25-31%), ethylidenenorbornene (4.4-5.3%), having
    a Mooney viscosity ML (1-4) at 121°C from 24 to 33,
    containing 27-33% by weight of extension oil of the
    paraffinic type (CORTIS 100 M, produced by TOTAL).

B = terpolymer : ethylene (44-51%), propylene (46-52%),
    ethylidenenorbornene (3-4%), having a Mooney
    viscosity ML (1-4) at 121°C = 40-50.

C = terpolymer : ethylene (52.5-41.5%), propylene
    (33-39%), ethylidenenorbornene (8.5-9.5%), having
    a Mooney viscosity ML (1-4) at 121°C = 60-70.

D = copolymer  : ethylene (52-58%), propylene (48-42%),
    having a Mooney viscosity ML (1-4) at 121°C = 36-46.

E = copolymer  : ethylene (30%), propylene (70%),
    having a Mooney viscosity ML (1-4) at 121°C higher
    than 30.

\*   in a press

\*\* in an injection press

\*\*\* in an extruder (extrusion).  The temperature indi-
    cated is the temperature in the extruder head, the
    time being the one from the material entering to
    the material leaving the extruder.

0086620

C L A I M S :

1. A polymeric composition suitable for the manufacture of foamed articles, characterized by comprising a mixture of a foaming agent with a dynamically vulcanized mix of an EPDM rubber, or of an ethylene-propylene elastomeric copolymer, with 5% - 95% by weight, referred to the said mix, of a thermoplastics olefinic polymer.

2. A composition as claimed in Claim 1, characterized in that the foaming agent is present in an amount of from 0.5% to 10% by weight referred to the total weight of the composition.

3. A process for preparing a polymeric composition suitable for the manufacture of foamed articles, characterized by comprising subjecting to dynamic vulcanization a mix including an elastomer, composed of an EPDM rubber or of an ethylene-propylene copolymer, and a thermoplastics olefinic polymer in an amount of from 5% to 95% by weight referred to the mix with the elastomer, and then adding a foaming agent to the said mix at a temperature lower than the temperature at which the said foaming agent becomes active.

4. A process as claimed in Claim 3, characterized in that the said dynamic vulcanization is carried out in the presence of a vulcanizing agent in an amount of from 0.05% to 10% by weight referred to the weight of the elastomeric component.

# 0086620

## European Patent Office

## EUROPEAN SEARCH REPORT

Application number

EP 83 30 0617

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 040 934 (UNI ROYAL) *Claims 1,2,5; example 1, page 4, line 30 - page 5, line 10* | 1-4 | C 08 J 9/06 // (C 08 J 9/06 C 08 L 23/02 ) |
| Y | GB-A-1 355 383 (SANWA KAKO COMPANY) *Claim 1; example 1; page 2, lines 89-105* | 1-4 | |
| Y | US-A-3 806 558 (W.K.FISHER) *Claims 1,8; column 1, lines 51-65; column 2, lines 10-24; column 4, lines 25-64* | 1,3,4 | |
| A | FR-A-2 006 957 (SUMITOMO CHEMICAL CO.) *Claims 1,2,3,6* | 1-4 | |
| | | | **TECHNICAL FIELDS SEARCHED (Int. Cl. ³)** |
| | | | C 08 J |

The present search report has been drawn up for all claims

| Place of search THE HAGUE | Date of completion of the search 27-05-1983 | Examiner HALLEMEESCH A.D. |
|---|---|---|